# EUROPEAN PATENT APPLICATION

(11) **EP 4 517 706 A1**
(43) Date of publication of application: **05.03.2025**
(21) Application number: 23899313.3
(22) Date of filing: 22.05.2023
(51) Int. Cl.: G07C 9/00, G10L 17/00

(54) **VOICE AUTHENTICATION METHOD AND APPARATUS, AND ELECTRONIC DEVICE AND STORAGE MEDIUM**

(30) Priority: 05.12.2022 CN 202211552792
(71) Applicant: ZTE CORPORATION, Shenzhen, Guangdong 518057 (CN)
(72) Inventor: WANG, Liwei, Shenzhen, Guangdong 518057 (CN)
(74) Representative: Ziebig Hengelhaupt Intellectual Property Attorneys Patentanwaltskanzlei PartGmbB
(86) International application number: PCT/CN2023/095560
(87) International publication number: WO 2024/119722

(57) **Abstract**

The present application discloses a voice authentication method, a voice authentication apparatus, an electronic device and a storage medium. The method includes: determining security level information of a scene where a target device is located; generating corresponding voice authentication condition based on the security level information; and obtaining a target voice, determining that the target voice meets the voice authentication condition, and passing the authentication.

## Description

### CROSS-REFERENCE TO RELATED APPLICATIONS

This application claims priority to Chinese Patent Application CN202211552792.4, entitled "VOICE AUTHENTICATION METHOD, VOICE AUTHENTICATION APPARATUS, ELECTRONIC DEVICE AND STORAGE MEDIUM", and filed on December 5, 2022. The entire contents of which are incorporated by reference into the present application.

### TECHNICAL FIELD

The present application relates to the technical field of computer, and in particular to a voice authentication method, a voice authentication apparatus, an electronic device and a storage medium.

### BACKGROUND

Authentication refers to verifying whether a user has relevant permissions to access a system, control a device, etc.

In some cases, authentication can be performed in a variety of ways, such as passwords and voice. Among them, voice interaction has developed rapidly, which reduces the high dependence on the screen. When the screen does not work properly, authentication can also be performed, and the occurrence of accidental touches on the screen is reduced or even reduced. In the scene of voice authentication, voiceprint recognition is mostly used uniformly. Among them, voiceprint recognition is a type of biometric technology, also known as speaker recognition. The process of voiceprint recognition usually includes multiple stages such as signal acquisition, signal conversion, signal preprocessing (such as endpoint detection and noise elimination), feature extraction, voiceprint model training, feature matching, etc. In addition, the standard of voiceprint recognition is relatively strict, which leads to the misjudgment of users with corresponding permissions as unauthorized users in some cases.

It can be seen that in some cases, the method of using voice for authentication has technical problems of low efficiency and low accuracy.

### SUMMARY

In view of this, in order to solve some or all of the above technical problems, the present application provides a voice authentication method, a voice authentication apparatus, an electronic device and a storage medium.

In the first aspect, the present application provides a voice authentication method, and the method includes: determining security level information of a scene where a target device is located; generating corresponding voice authentication condition based on the security level information; and obtaining a target voice, determining that the target voice meets the voice authentication condition, and passing the authentication.

In the second aspect, the present application provides a voice authentication apparatus, and the apparatus includes: a determination unit, a generation unit and a determination unit. The first determination unit is configured for determining security level information of a scene where a target device is located. The generation unit is configured for generating corresponding voice authentication condition based on the security level information. The second determination unit is configured for obtaining a target voice, determining that the target voice meets the voice authentication condition, and passing the authentication.

In the third aspect, the present application provides an electronic device including a memory and a processor. The memory is configured for storing a computer program. The processor is configured for executing the computer program stored in the memory. The above-mentioned voice authentication method of the first aspect is implemented when the computer program is executed.

In the fourth aspect, the present application provides a computer-readable storage medium, a computer program is storing on the computer-readable storage medium. The above-mentioned voice authentication method of the first aspect is implemented when the computer program is executed by a processor.

In the fifth aspect, the present application provides a computer program, and the computer program includes a computer-readable code. The processor in the equipment implements the method of any embodiment of the above-mentioned voice authentication method of the first aspect when the computer-readable code is executed on an equipment.

### BRIEF DESCRIPTION OF THE DRAWINGS

FIG. 1 is a flowchart of a voice authentication method provided by the present application.
FIG. 2 is a flowchart of another voice authentication method provided by the present application.
FIG. 3A is a structural schematic diagram of the of a security level division module in a voice authentication method provided by the present application.
FIG. 3B is a flowchart of an unlocking process in a voice authentication method provided by the present application.
FIG. 3C is a structural schematic diagram of an unlocking condition generation module in a voice authentication method provided by the present application.
FIG. 3D is a schematic diagram of a corresponding relationship between security level and voice authentication condition in a voice authentication method provided by the present application.
FIG. 3E is a schematic diagram of multiple set of IP information in a voice authentication method provided by the present application.
FIG. 3F is a schematic diagram of multiple set of location information in a voice authentication method provided by the present application.
FIG. 4 is a structural schematic diagram of a voice authentication apparatus provided by the present application.
FIG. 5 is a structural schematic diagram of an electronic device provided by the present application.

### DETAILED DESCRIPTION OF THE EMBODIMENTS

Various exemplary embodiments of the present application will now be described in detail with reference to the accompanying drawings. It should be noted that unless otherwise specifically stated, the relative arrangement of the components and steps, the numerical expressions and the numerical values described in these embodiments do not limit the scope of the present application. It can be understood by those skilled in the art that the terms "first", "second" and the like in the present application are only used to distinguish objects such as different steps, devices or modules, and neither represent any specific technical meaning nor represent the logical order between them. It should also be understood that in this embodiment, "multiple" can refer to two or more, and "at least one" can refer to one, two or more. It should also be understood that for any component, data or structure mentioned in the present application, in the absence of explicit limitation or contrary revelation given in the context, it can generally be understood as one or more. In addition, the term "and/or" in the present application is only a kind of association relationship describing the associated objects, indicating that there can be three kinds of relationships, for example, A and/or B can represent: A exists alone, A and B exist at the same time, and B exists alone. In addition, the character "/" in the present application generally indicates that the associated objects before and after are in an "or" relationship. It should also be understood that the description of each embodiment of the present application emphasizes the differences between the various embodiments, and the same or similar aspects can be referenced to each other. For the sake of brevity, they will not be repeated one by one. The following description of at least one exemplary embodiment is actually only illustrative and is by no means a limitation on the present application and its application or use. The techniques, methods and devices known to ordinary technicians in the relevant field may not be discussed in detail, but in appropriate cases, the above techniques, methods and devices should be considered as part of the specification. It should be noted that similar numbers and letters represent similar items in the following figures, so once an item is defined in one figure, it does not need to be further discussed in the subsequent figures. It should be noted that the embodiments and features in the embodiments of the present application can be combined with each other without conflict. To facilitate the understanding of the present application, the present application will be described in detail with reference to the accompanying drawings and in combination with the embodiments. Obviously, the described embodiments are part of the embodiments of the present application, rather than all of the embodiments. Based on the embodiments in the present application, all other embodiments obtained by those skilled in the art without creative work are in the scope of the present application.

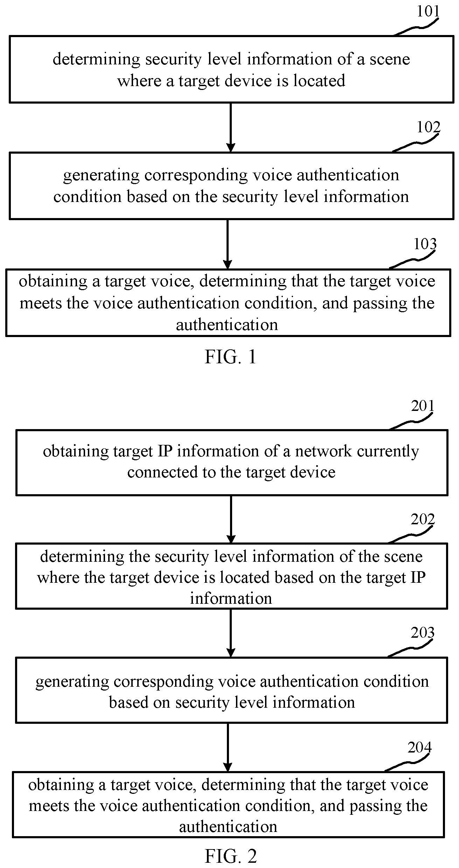

FIG. 1 is a flowchart of a voice authentication method provided by the present application. As shown in FIG. 1, the method includes step 101 to step 103.

Step 101, determining security level information of a scene where a target device is located.

In this embodiment, the target device can be any electronic device. As an example, the target device can be a mobile phone, a server, a smart door, etc. The above security level information can represent the security level of the scene where the target device is located. As an example, the security level information can be expressed in a numerical value. The larger numerical value can indicate the higher security level; or, the smaller numerical value can indicate the higher security level. In addition, the security level information can also be expressed in the form of text, image, color identification, etc.

Step 102, generating corresponding voice authentication condition based on the security level information.

In this embodiment, the voice authentication condition may be a condition for determining whether a voice (such as the target voice described later) has passed authentication. As an example, the voice authentication condition may include at least one of the following items: the first item, the voice includes a preset keyword; the second item, the voice includes a variable word that changes according to a preset rule; the third item, the voice passes voiceprint recognition. Here, before executing step 102, predetermining the corresponding relationship between the security level information and the voice authentication condition.

For example, at least some (or all) different security level information can correspond to different voice authentication conditions. For example, security level information 1 can correspond to voice authentication condition 1; security level information 2 can correspond to voice authentication condition 2; security level information 3 can correspond to voice authentication condition 3. The security level information 1, security level information 2 and security level information 3 respectively represent different security levels. Voice authentication condition 1, voice authentication condition 2 and voice authentication condition 3 respectively represent different voice authentication conditions.

Step 103, obtaining a target voice, determining that the target voice meets the voice authentication condition, and passing the authentication.

In this embodiment, the target voice can be a voice used for authentication.

After obtaining the target voice, it can be determined whether the target voice satisfies the above-mentioned voice authentication condition. If the target voice satisfies the voice authentication condition, the authentication is passed.

Here, passing the authentication, which can mean obtaining the permission to use the target device, for example, obtaining the permission to use the mobile phone; it can also mean obtaining the permission to use the application installed on the above-mentioned target device, for example, obtaining the permission to use the application installed in the mobile phone; it can also mean obtaining the permission to control the target device to perform preset operations, for example, the permission to control the door lock to open.

The voice authentication method provided by the present application can determine the security level information of the scene where the target device is located, and then generate the corresponding voice authentication condition based on the security level information; then, obtain the target voice, and determine that the target voice meets the voice authentication condition, and pass the authentication. Therefore, the corresponding voice authentication condition can be generated based on the security level of the scene where the target device is located, and then the voice authentication condition is adopted to determine whether the voice can pass the authentication, which can improve the efficiency and accuracy of the authentication in the corresponding scene.

In some implementations of this embodiment, the following step one and step two can be adopted to perform the above step 101 to determine the security level information of the scene where the target device is located.

Step one, obtaining target location information of a current location of the target device. The target location information can represent the current location of the target device. The current location can be the real-time location of the target device obtained when executing the above step one.

Step two, determining the security level information of the scene where the target device is located based on the target location information. Here, before executing step two, predetermining the corresponding relationship between the target location information and the security level information. Or, according to the preset rule, determining the security level information of the scene where the target device is located based on the target location information.

It can be understood that in the above implementation, the corresponding voice authentication condition can be generated by the current location of the target device, and then adopting the voice authentication condition to determine whether the voice can pass the authentication, which can further improve the efficiency and accuracy of the authentication in the corresponding scene.

In some application scenes in the above implementation, before executing the above step one, the following steps (including the first step and the second step) can also be performed: the first step, collecting location information of a location of the target device in the second historical time period according to a second frequency, and obtaining a multiple set of the location information.

The second frequency can be any preset frequency. For example, the second frequency can be once every 60 seconds.

The second historical time period can be any time period before executing the above first step. The second historical time period can be a time period with a fixed start time and a fixed end time, or a time period with a start time that changes with time and an end time that changes with time.

The multiple set of location information can include multiple location information of the location of the target device in the second historical time period. The multiple set of location information can include the same location information.

The second step, determining a second number of times of collection corresponding to location information in the multiple set of the location information.

The second number of times of collection corresponding to the location information is: a number of times the target device is at a location indicated by a corresponding location information during collection

On this basis, the following method (including the third step to the fifth step) can be adopted to perform the above-mentioned step two: the third step, determining a location information group whose distance from a location indicated by the target location information is less than or equal to a preset distance from the multiple set of the location information.

The location information group can be a plurality of location information whose distance from a location indicated by the target location information is less than or equal to a preset distance (for example, 100 meters) in the multiple set of the location information

The fourth step, determining sum of the second number of times of collection corresponding to each location information in the location information group, and obtaining a second result.

The fifth step, determining the security level information of the scene where the target device is located based on the second result.

Here, before executing the fifth step, predetermining the corresponding relationship between the second result and the security level information. Or, according to the preset rule, determining the security level information of the scene where the target device is located based on the second result.

It can be understood that in the above implementation, the corresponding voice authentication condition can be generated according to the location of the target device in the historical time period, and then the voice authentication condition is adopted to determine whether the voice can pass the authentication, which can further improve the efficiency and accuracy of the authentication in the corresponding scene.

In some cases of the above application scene, the above-mentioned fifth step can be performed by adopting the following manner: first, determining a second target interval including the second result from a predetermined second interval set.

Each interval in the second interval set corresponds to one security level information.

The second target interval can be the interval in the second interval set that includes the second result.

Afterwards, determining the security level information corresponding to the second target interval as the security level information of the scene where the target device is located.

As an example, the second frequency may be once every 60 seconds, and the second historical time period may be 0 o'clock to 24 o'clock. The second interval set may include the following three intervals: greater than 60, greater than 10 and less than or equal to 60, and less than or equal to 10. The interval greater than 60 corresponds to the security level information "-1", the interval greater than 10 and less than or equal to 60 corresponds to the security level information "0", and the interval less than or equal to 10 corresponds to the security level information "-1". Therefore, if the second result is 20, it can be determined that the security level information of the scene where the target device is located is "0".

It can be understood that in the above-mentioned case, the security level information of the scene where the target device is located is determined by the predetermined second interval set, and then the corresponding voice authentication condition is generated. The voice authentication condition is adopted to determine whether the voice can pass the authentication, which can further improve the efficiency and accuracy of the authentication in the corresponding scene.

In some implementations of this embodiment, the above-mentioned step 102 may be performed by adopting the following manner: generating a voice authentication condition whose authentication difficulty matches a security level indicated by the security level information based on the security level information.

The authentication difficulty may be measured by adopting the authentication duration. Generally, the longer the authentication duration and the greater the authentication difficulty, the higher the authentication accuracy.

Here, the higher the security level, the lower the authentication difficulty of the generated voice authentication condition when performing authentication.

It can be understood that in the above-mentioned implementation, the voice authentication condition whose authentication difficulty matches the security level indicated by the security level information can be generated, thereby, when adopting the voice authentication condition to determine whether the voice can pass the authentication, the efficiency and accuracy of the authentication in the corresponding scene can be further improved.

In some application scene of the above-mentioned implementation methods, the following method can be adopted to generate the voice authentication condition whose authentication difficulty matches the security level indicated by the security level information based on the security level information includes: in response to that the security level information indicates a first security level, determining that the voice authentication condition includes a first voice authentication condition; in response to that the security level information indicates a second security level, determining that the voice authentication condition includes a second voice authentication condition; and in response to that the security level information indicates a third security level, determining that the voice authentication condition includes a third voice authentication condition. The first security level is higher than the second security level, and the second security level is higher than the third security level. Here, the first voice authentication condition, the second voice authentication condition, and the third voice authentication condition can be three different voice authentication conditions.

As an example, the first voice authentication condition may include: the target voice includes a preset keyword. The second voice authentication condition may include: the target voice includes a variable word that changes according to a preset rule, and the target voice includes a preset keyword. The third voice authentication condition may include: the target voice passes voiceprint recognition, and the target voice includes a preset keyword.

As another example, the first voice authentication condition may include: the target voice includes a preset keyword. The second voice authentication condition may include: the target voice includes a variable word that changes according to a preset rule. The third voice authentication condition may include: the target voice passes voiceprint recognition, and the target voice includes a preset keyword.

As yet another example, the first voice authentication condition may include: the target voice includes a preset keyword. The second voice authentication condition may include: the target voice includes a variable word that changes according to a preset rule, and the target voice includes a preset keyword. The third voice authentication condition may include: the target voice includes a variable word that changes according to a preset rule, the target voice passes voiceprint recognition, and the target voice includes a preset keyword.

In some cases, the difficulty of authentication adopting the first voice authentication condition may be less than the difficulty of authentication adopting the second voice authentication condition; the difficulty of authentication adopting the second voice authentication condition may be less than the difficulty of authentication adopting the third voice authentication condition.

It can be understood that in the above-mentioned application scene, different voice authentication conditions can be generated for different security levels, and the second security level is higher than the third security level, and then adopting the voice authentication condition to determine whether the voice can pass the authentication, which can further improve the security and accuracy of the authentication.

In some cases of the above-mentioned application scene, the first voice authentication condition includes: the target voice includes a preset keyword. The second voice authentication condition includes: the target voice includes a variable word that changes according to a preset rule. The third voice authentication condition includes: the target voice passes voiceprint recognition.

It can be understood that in the above-mentioned case, the higher the security level of the scene, the lower the authentication difficulty of the voice authentication condition, thereby further improving the security and accuracy of the authentication.

In some implementations of this embodiment, after executing the above-mentioned step 103, the target device can perform an unlocking operation.

It can be understood that in the above-mentioned implementation method, a corresponding voice authentication condition can be generated based on the security level of the scene where the target device is located, and then the voice authentication condition is adopted to determine whether the target device is unlocking, which can improve the efficiency and accuracy of unlocking.

FIG. 2 is a flowchart of another voice authentication method provided by the present application. As shown in FIG. 2, the method includes step 201 to step 205.

Step 201, obtaining target IP (Internet Protocol) information of a network currently connected to the target device.

In this embodiment, the target IP information may be the IP information of the network to which the target device is currently connected.

As an example, the target IP information may include at least one of a network type, a network range, and network bits.

Step 202, determining the security level information of the scene where the target device is located based on the target IP information.

In this embodiment, before executing the step 202, predetermining the corresponding relationship between the IP information and the voice authentication condition.

For example, at least some (or all) different IP information can correspond to different voice authentication conditions. For example, IP information 1 can correspond to voice authentication condition 1; IP information 2 can correspond to voice authentication condition 2; IP information 3 can correspond to voice authentication condition 3. The IP information 1, IP information 2 and IP information 3 respectively represent different security levels. Voice authentication condition 1, voice authentication condition 2 and voice authentication condition 3 respectively represent different voice authentication conditions.

Step 203, generating corresponding voice authentication condition based on security level information.

In this embodiment, step 203 is basically the same as step 102 in the corresponding embodiment of FIG. 1, and will not be repeated here.

Step 204, obtaining a target voice, determining that the target voice meets the voice authentication condition, and passing the authentication.

In this embodiment, step 204 is basically the same as step 103 in the corresponding embodiment of FIG. 1, and will not be repeated here.

It should be noted that, in addition to the above-mentioned contents, this embodiment can also include the corresponding technical features described in the embodiment corresponding to FIG. 1, thereby realizing the technical effect of the voice authentication method shown in FIG. 1. Please refer to the relevant description of FIG. 1 for details. For the sake of simplicity, no further details are given here.

The voice authentication method provided by the present application generates corresponding voice authentication condition by the target IP information of the network to which the target device is currently connected, and then adopts the voice authentication condition to determine whether the voice can pass the authentication, which can further improve the efficiency and accuracy of the authentication in the corresponding scene.

In some implementations of this embodiment, before executing the above-mentioned step 101, the following steps can also be performed.

The first step, collecting the IP information of the target device connecting to the network in a first historical time period according to a first frequency, and obtaining a multiple set of the IP information.

The first frequency can be any pre-set frequency. For example, the first frequency can be once every 60 seconds. The first frequency and the above second frequency can be the same or different.

The first historical time period can be any time period before executing the above first step. The first historical time period can be a time period with a fixed start time and a fixed end time, or a time period with a start time that varies with time and an end time that varies with time. The first historical time period and the above second historical time period can be the same or different.

The multiple set of IP information may include multiple IP information connected to the network in the first historical time period. The multiple set of location information may include the same IP information.

The second step, determining a first number of times of collection corresponding to IP information in the multiple set of IP information.

The first number of times of collection corresponding to the IP information is: a number of times the target device is connected to the network indicated by corresponding IP information during collection.

On this basis, the following method (including the third step to the fifth step) can be adopted to perform the above-mentioned step 202.

The third step, determining an IP information group whose network type, network range and network bits are identical to the target IP information from the multiple set of IP information. The IP information group can be multiple IP information in the multiple set of IP information whose network type, network range and network bits are the same as the target IP information.

The fourth step, determining sum of the first number of times of collection corresponding to each IP information in the IP information group, and obtaining a first result.

The fifth step, determining the security level information of the scene where the target device is located based on the first result.

Here, before executing the fifth step, predetermining the corresponding relationship between the first result and the security level information. Or, according to the preset rule, determining the security level information of the scene where the target device is located based on the second result.

It can be understood that in the above implementation, the corresponding voice authentication condition can be generated according to the IP information of the target device connected to the network in the historical time period, and then the voice authentication condition is adopted to determine whether the voice can pass the authentication, which can further improve the efficiency and accuracy of the authentication in the corresponding scene.

In some application scenes of the above implementation, the fifth step can be performed in the following manner.

First, determining a first target interval including the first result from a predetermined first interval set.

Each interval in the first interval set corresponds to one security level information.

The first target interval can be the interval in the first interval set that includes the first result.

Afterwards, determining the security level information corresponding to the first target interval as the security level information of the scene where the target device is located.

As an example, the first frequency may be once every 60 seconds, and the first historical time period may be 0 o'clock to 24 o'clock. The first interval set may include the following three intervals: greater than 60, greater than 10 and less than or equal to 60, and less than or equal to 10. The interval greater than 60 corresponds to the security level information "-1", the interval greater than 10 and less than or equal to 60 corresponds to the security level information "0", and the interval less than or equal to 10 corresponds to the security level information "-1". Therefore, if the first result is 20, it can be determined that the security level information of the scene where the target device is located is "0".

It can be understood that in the above-mentioned case, the security level information of the scene where the target device is located is determined by the predetermined first interval set, and then the corresponding voice authentication condition is generated. The voice authentication condition is adopted to determine whether the voice can pass the authentication, which can further improve the efficiency and accuracy of the authentication in the corresponding scene.

The above-mentioned authentication method is applied to the field of unlocking intelligent terminal below, and is used as an example to illustrate the present application. However, it should be noted that the present application may have the following features, but the following description does not constitute a limitation on the scope of the present application.

This method is to realize voice unlocking intelligent terminal, which can include the following two processes: first, the user sets the unlocking keywords and variable logic (such as the above-mentioned variable word) on the intelligent terminal, and the system automatically configures different levels of voice unlocking difficulty for different scenes, and generates corresponding unlocking conditions (such as setting the first voice authentication condition, the second voice authentication condition, and the third voice authentication condition); second, reading the voice (such as the above-mentioned target voice), and unlocking if the unlocking conditions (such as setting the first voice authentication condition, the second voice authentication condition, and the third voice authentication condition) are met. Ultimately, unlocking is fast in a safe environment, and information security is guaranteed in a risky environment, thus improving user experience.

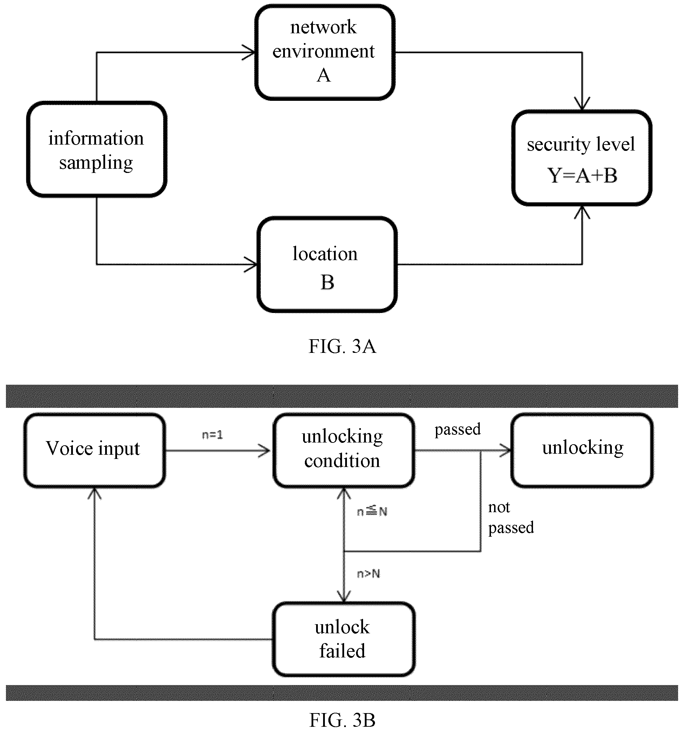

In this embodiment, as shown in FIG. 3A, FIG. 3A is a structural schematic diagram of the of a security level division module in a voice authentication method provided by the present application. The functions of the security level classification module include: classifying the security level of the current environment (such as the above-mentioned scene where the target device is located) according to two factors: network environment and location.

First, the information sampling module can read the current network data IP (such as the above-mentioned target IP information) and location information (such as the above-mentioned target location information), and the sampling interval is 60 seconds (such as the above-mentioned first frequency and the second frequency). The collected network data (such as the above-mentioned target IP information) is passed to the network environment A module, and the location information (such as the above-mentioned target location information) is passed to the positioning B module.

Afterwards, the network environment A module receives the network information (such as the above-mentioned target IP information) from the information sampling module, and establishes the first three segments of the IP (such as the network type, network range and network bits) of the network set (that is, the above-mentioned multiple set of the IP information) based on the network IP address; and counts the average number of times each IP address in the set appears every day (that is, the above-mentioned first result is divided by the number of days included in the first historical time period) and the data collected every day, and passes to the security level module.

The positioning B module can receive the location information (such as the above-mentioned target location information) from the information sampling module, and establish the multiple set of the location information of location set based on the location data, and count the average number of times each location in the set appears every day (that is, the above-mentioned second result is divided by the number of days included in the second historical time period). Each time new location information is received, the distance to the location in the existing location set can be calculated. When the distance is less than 100 meters, a new set will not be created, and the number of times corresponding to the original location set will only be increased by 1. Then the security value B is calculated based on the average number of times it occurs every day and passed to the security level module.

In the above-mentioned process, the following method can be adopted to set security values (that is, the above-mentioned security level information) for different sets (including network set and location set).

Security: When the average number of times per day counted by the set is greater than 60 times, it means that the current environment is safe enough, and even the impact of other factors on the security level can be ignored. The security value is set to -1.

Ordinary: When the average number of times per day counted by the set is greater than 10 times and less than or equal to 60 times, it means that the current environment is normal, and the impact of other factors on the security level needs to be considered. The security value is set to 0.

Risk: When the average number of times per day counted by the set is less than or equal to 10 times, it means that there is a risk in the current environment. Unless other security factors can give a higher level of security prompts, it should be vigilant. The security value is set to 1.

Security level: security level Y = network environment A + positioning B. Security level Y has five possible values -2, -1, 0, 1, 2. Accordingly, it can be divided into three security levels security level: Y<0, 1>Y≥0, Y≥1.

Next, as shown in FIG. 3B, FIG. 3B is a flowchart of an unlocking process in a voice authentication method provided by the present application. In FIG. 3B, the unlocking module can preset the number of unlocking times N, where n represents the current number of unlocking times.

Unlocking conditions (such as the above-mentioned first voice authentication condition, the second voice authentication condition, and the third voice authentication condition): unlocking conditions generated according to security level Y. Voice input: configured to collect user voice (such as the above-mentioned target voice) input. Unlocking failure: unlocking failure and entering the next voice collection. Unlocking: unlocking the intelligent terminal, that is, the above-mentioned target device performs the unlocking operation.

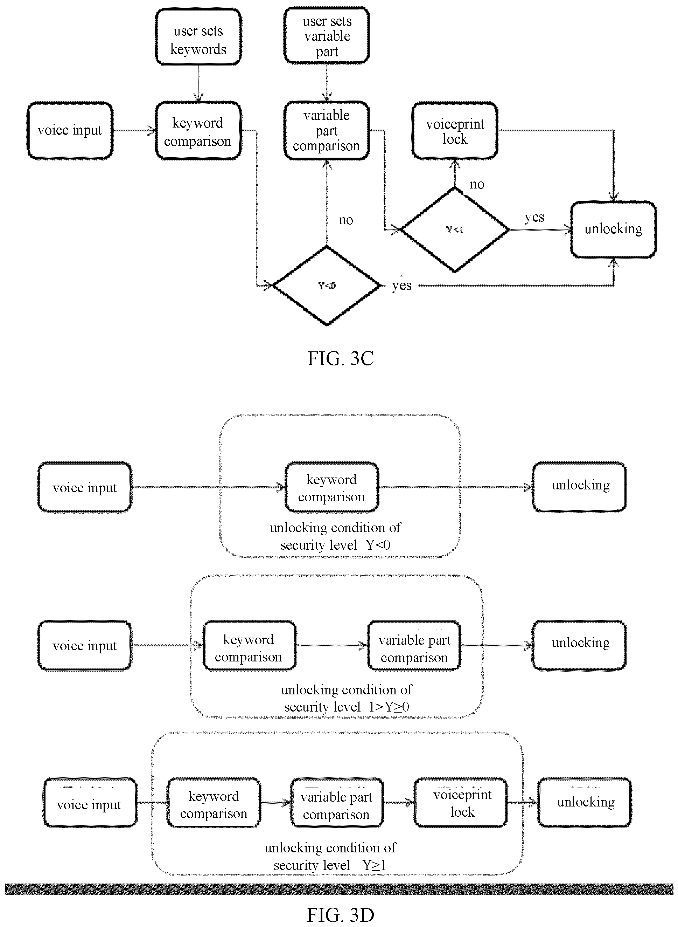

As shown in FIG. 3C, FIG. 3C is a structural schematic diagram of an unlocking condition generation module in a voice authentication method provided by the present application. This module will generate different unlocking conditions according to different security levels Y.

User sets keywords: the user sets keywords in the setting interface for unlocking. For example, the keyword can be "Haha". User sets variable part: the user sets a logical variable part in the setting interface for unlocking. For example, the variable part can be today's day of the week. If today is Monday, "Monday" must be recognized. Keyword comparison: comparing the keyword with the string obtained by voice recognition. Variable part comparison: after passing the keyword comparison, if Y<0, unlocking directly; if Y≥0, the variable part set by the user is continued to be compared with the string obtained by voice recognition. Voiceprint lock: after passing the variable part comparison, if Y<1, unlocking directly; if Y≥1, voiceprint recognition must be performed. Determining whether to unlock by voiceprint comparison.

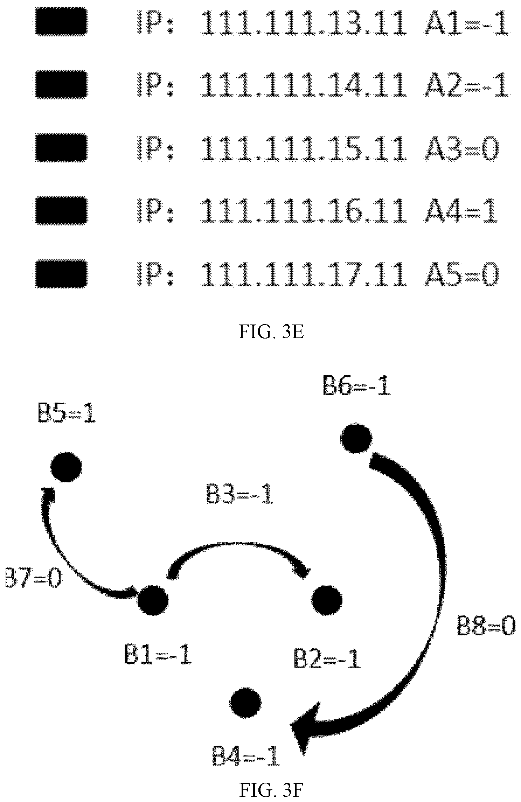

As shown in FIG. 3D to FIG. 3F, FIG. 3D is a schematic diagram of a corresponding relationship between security level and voice authentication condition in a voice authentication method provided by the present application; FIG. 3E is a schematic diagram of multiple set of IP information in a voice authentication method provided by the present application; FIG. 3F is a schematic diagram of multiple set of location information in a voice authentication method provided by the present application.

After the above security level classification, the security level Y has been obtained at this time.

The keyword set by the user is configured for keyword comparison. The variable part set by the user is configured for variable part comparison. For example, if the user connects to the network A1 in the positioning B module 1, the security level Y= -2, at this time, the unlocking condition is the keyword (that is, the target voice includes the preset keyword). If the user connects to the network in the network set A4 at the location in the location set B1, at this time, the security level Y=0, then, at this time, after passing the keyword comparison, the variable part comparison is still required, and the unlocking is completed only after passing. That is, it needs to meet: the target voice includes preset keywords, and the target voice includes variable words that change according to the preset rule. If the user connects to the network in the network set A3 at the location in the location set B5, at this time, the security level Y=1, then after passing the keyword comparison and variable part comparison, the voiceprint lock is still required, and the unlocking is completed only after passing. That is, it needs to meet: the target voice includes preset keywords, and the target voice includes variable words that change according to the preset rule, and the target voice passes the voiceprint recognition. The above-mentioned input voice can be converted into word fragments.

In the process of unlocking the intelligent terminal by voice, the voice input module collects voice input. After that, the following case may exist.

Case 1: if the security level Y<0, the unlocking condition is keyword comparison. It is used under the case of ensuring safety, and unlocking after the keyword is collected, which is equivalent to waking up the phone directly and unlocking. Speed is fast, and security is poor.

Case 2: if the security level 1>Y≥0, the unlocking condition is keyword comparison and variable part comparison. It is used in a normal environment. After passing the keyword comparison set by the user, the variable part set by the user still needs to be recognized. For example, the keyword is "Haha", and the variable part is today's day of the week. If today is Monday, the keyword comparison is passed after recognizing "Haha", and it is still necessary to recognize "Monday" to complete the variable part comparison to unlock. Speed is relatively fast speed, and having a certain degree of security.

Case 3: If the security level Y≥1, the unlocking condition is voiceprint lock: it is necessary to make a unique judgment based on each person's voiceprint after keyword comparison and variable part comparison. It is highly secure but there is a risk of not being able to identify it. The speed is slow.

If the corresponding unlocking condition is passed, the unlocking intelligent terminal is unlocked. If the unlocking condition is not passed, the value of n is incremented by 1, and performing the string comparison continuously when n≤N. If n>N, the unlocking fails, and the process returns to the voice input module, re-acquires the voice, and executes the above steps.

N represents the above-mentioned number of times of the preset unlocking, and n represents the number of times of the current unlocking.

Here, the above-mentioned location set (that is, the above-mentioned multiple set of the location information) and network set (that is, the above-mentioned multiple set of the IP information) are described as follows.

As shown in FIG. 3A, the information sampling module performs sampling every 60 seconds and passes the network information and location information to the subsequent modules. The network environment A module creates a network set A1 (that is, the network set A1 in FIG. 3E) based on the IP address of the network information passed by the information sampling module, and increases the number of times of collection corresponding to A1 by 1. According to the average number of times per day of A1, obtaining that the security value corresponding to A1 is -1, as shown in FIG. 3E. Similarly, the backend will calculate different network sets (for example, network set A1, network set A2, network set A3, network set A4, network set A5 in FIG. 3E).

The positioning module B can create a location set B1 (that is, the location set B1 in FIG. 3F) based on the location information transmitted by the information sampling module and increase the number of times of collection corresponding to the location set B1 by 1. According to the average number of times per day of the location set B1, obtaining that the safety value corresponding to the location set B1 is -1. As shown in FIG. 3F, the backend will calculate different location sets (for example, location set B1, location set B2, location set B3, location set B4, location set B5, location set B6, location set B7, location set B8).

The location set B1, location set B2, location set B4, location set B5, and location set B6 can be areas where the collection location distance is less than the preset distance (for example, 100 meters). The location set B3, location set B7, and location set B8 can respectively be paths connecting the corresponding areas. Each of the above-mentioned paths can be created adopting the following strategy: in the process of collecting location information, if the location information collected for a consecutive preset first number of times (for example, 10 times) enters different existing location sets, and the number of sampling times corresponding to the different location sets entered is greater than or equal to the second preset number (for example, 1) and less than the third preset number (for example, 10), then creating a path based on the different location sets entered. In an exemplary embodiment, the created path can be used as a new location set, and the number of times of sampling corresponding to the new location set is the sum of the number of times of sampling corresponding to each different location set entered. The security value corresponding to the new location set can be calculated by adopting the above manner based on the number of times of sampling corresponding to the new location set.

For network set, the first three segments of the IP address (that is the above-mentioned network type, network range and network bits) can be used to determine whether being the same. If being the same, the number of times of collection of the original network set will be increased by 1, otherwise a new network set will be created. For location set, whether to create a new location set will be determined according to whether the distance between the new location and the location in the existing location set is less than 100 meters. If it is less than 100 meters, the number of times of collection of the original location set will be increased by 1; otherwise a new location set will be created.

In addition, it can base on the average number of times of collection per day for different sets (including network set and location set); if being greater than 60 times, the safety value is -1; if being greater than 10 and less than or equal to 60, the safety value is 0; and if being less than or equal to 10, the safety value is 1.

For example, if the user is at location in location set B1 and connects to a network in network set A1, the security level is Y= -2 at this time; if the user is at location in location set B1 and connects to a network in network A3, the security level is Y=-1 at this time; if the user is at location in location set B1 and connects to a network in network set A4, the security level is Y=0 at this time; if the user is at location in location set B5 and connects to a network in network set A3, the security level is Y=1 at this time.

This method can reduce the reliance on the screen and complete the unlocking in the case that the screen does not meet the unlocking conditions (for example, contact failure in some areas of the screen) or both hands cannot unlock (too busy or being oil pollution). In addition, it can achieve long-distance unlocking, and truly realize human-computer interaction only by voice.

It should be noted that, in addition to the contents recorded above, this embodiment may also include the technical features described in the above embodiments, so as to achieve the technical effects of the voice authentication method shown above, which refers to the above description for details. For the sake of brevity, it will not be repeated here.

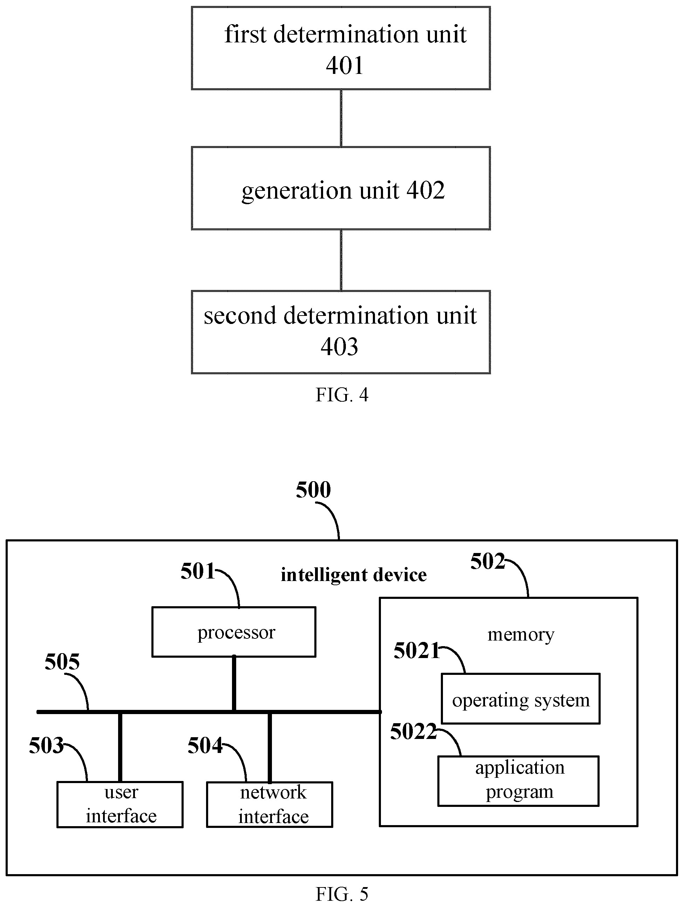

FIG. 4 is a structural schematic diagram of a voice authentication apparatus provided by the present application. It includes: a first determination unit 401, a generation unit 402, and a second determination unit 403. The first determination unit 401 is configured for determining security level information of a scene where a target device is located. The generation unit 402 is configured for generating corresponding voice authentication condition based on the security level information. The second determination unit 403 is configured for obtaining a target voice, determining that the target voice meets the voice authentication condition, and passing the authentication.

In an implementation, the determining the security level information of the scene where the target device is located comprises: obtaining target Internet Protocol, IP information of a network currently connected to the target device; and determining the security level information of the scene where the target device is located based on the target IP information.

In an implementation, before the obtaining the target IP information of the network currently connected to the target device, the device further includes: a first collection unit and a third determination unit. The first collection unit (not shown in the figure) is configured for collecting the IP information of the target device connecting to the network in a first historical time period according to a first frequency, and obtaining a multiple set of the IP information. The third determination unit (not shown in the figure) is configured for determining a first number of times of collection corresponding to IP information in the multiple set of IP information. The first number of times of collection corresponding to the IP information is: a number of times the target device is connected to the network indicated by corresponding IP information during collection. The determining the security level information of the scene where the target device is located based on the target IP information comprises: determining an IP information group whose network type, network range and network bits are identical to the target IP information from the multiple set of IP information; determining sum of the first number of times of collection corresponding to each IP information in the IP information group, and obtaining a first result; and determining the security level information of the scene where the target device is located based on the first result.

In an implementation, the determining the security level information of the scene where the target device is located based on the first result comprises: determining a first target interval including the first result from a predetermined first interval set; wherein each interval in the first interval set corresponds to one security level information; and determining the security level information corresponding to the first target interval as the security level information of the scene where the target device is located.

In an implementation, the determining the security level information of the scene where the target device is located comprises: obtaining target location information of a current location of the target device; and determining the security level information of the scene where the target device is located based on the target location information.

In an implementation, before the obtaining the target location information of the current location of the target device, the device further comprises: a second collection unit and a fourth determination unit. The second collection unit (not shown in the figure) configured for collecting location information of a location of the target device in the second historical time period according to a second frequency, and obtaining a multiple set of the location information. The fourth determination unit (not shown in the figure) configured for determining a second number of times of collection corresponding to location information in the multiple set of the location information; wherein the second number of times of collection corresponding to the location information is: a number of times the target device is at a location indicated by a corresponding location information during collection. The determining the security level information of the scene where the target device is located based on the target location information comprises: determining a location information group whose distance from a location indicated by the target location information is less than or equal to a preset distance from the multiple set of the location information; determining sum of the second number of times of collection corresponding to each location information in the location information group, and obtaining a second result; and determining the security level information of the scene where the target device is located based on the second result.

In an implementation, the determining the security level information of the scene where the target device is located based on the second result comprises: determining a second target interval including the second result from a predetermined second interval set; wherein each interval in the second interval set corresponds to one security level information; and determining the security level information corresponding to the second target interval as the security level information of the scene where the target device is located.

In an implementation, the generating the corresponding voice authentication condition based on the security level information comprises: generating a voice authentication condition whose authentication difficulty matches a security level indicated by the security level information based on the security level information.

In an implementation, the generating the voice authentication condition whose authentication difficulty matches the security level indicated by the security level information based on the security level information comprises: in response to that the security level information indicates a first security level, determining that the voice authentication condition includes a first voice authentication condition; in response to that the security level information indicates a second security level, determining that the voice authentication condition includes a second voice authentication condition; and in response to that the security level information indicates a third security level, determining that the voice authentication condition includes a third voice authentication condition. The first security level is higher than the second security level, and the second security level is higher than the third security level.

In an implementation, the first voice authentication condition includes: the target voice includes a preset keyword; the second voice authentication condition includes: the target voice includes a variable word that changes according to a preset rule; the third voice authentication condition includes: the target voice passes voiceprint recognition.

In an implementation, after passing the authentication, the device further includes: an execution unit configured for performing an unlocking operation on the target device.

The voice authentication apparatus provided in this embodiment may be a voice authentication apparatus as shown in FIG. 4, which can execute all steps of the above voice authentication methods, thereby achieving the technical effects of the above voice authentication methods. Please refer to the above description for details. For the sake of simplicity, it will not be repeated here.

FIG. 5 is a structural schematic diagram of an electronic device provided by the present application. The electronic device 500 shown in FIG. 5 includes: at least one processor 501, a memory 502, at least one network interface 504 and other user interfaces 503. The various components in the electronic device 500 are coupled together by the bus system 505. It can be understood that the bus system 505 is configured to realize the connection and communication between these components. In addition to the data bus, the bus system 505 further includes a power bus, a control bus and a status signal bus. However, for the sake of clarity, various buses are marked as bus system 505 in FIG. 5.

The user interface 503 may include a display, a keyboard or a pointing device (for example, a mouse, a trackball, a touchpad or a touch screen, etc.).

It is understood that the memory 502 in the present application may be a volatile memory or a non-volatile memory, or may include both volatile memories and non-volatile memories. The non-volatile memory may be a read-only memory (ROM), a programmable read-only memory (PROM), an erasable programmable read-only memory (EPROM), an electrically erasable programmable read-only memory (EEPROM) or a flash memory. The volatile memory may be a random access memory (RAM), which is used as an external cache. By way of example but not limitation, many forms of RAM are available, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDRSDRAM), enhanced synchronous dynamic random access memory (Enhanced SDRAM, ESDRAM), synchronous linked dynamic random access memory (Synch link DRAM, SLDRAM), and direct rambus random access memory (Direct Rambus RAM, DRRAM). The memory 502 described herein is intended to include, but is not limited to, these and any other suitable types of memory.

In some embodiments, the memory 502 stores the following elements, executable units or data structures, or a subset thereof, or an extended set thereof: an operating system 5021 and an application program 5022.

The operating system 5021 includes various system programs, such as a framework layer, a core library layer, a driver layer, etc., which are configured to implement various basic services and process tasks based on hardware. The application program 5022 includes various application programs, such as a media player, a browser, etc., which are configured to implement various application services. The program for implementing the method of the present disclosure may be included in the application program 5022.

In this embodiment, by calling the program or instruction stored in the memory 502, in an exemplary embodiment, it may be a program or instruction stored in the application program 5022, and the processor 501 is configured to execute the method steps provided by each method embodiment, for example, including: determining security level information of a scene where a target device is located; generating corresponding voice authentication condition based on the security level information; and obtaining a target voice, determining that the target voice meets the voice authentication condition, and passing the authentication. The above-mentioned method disclosed by the present application can be applied to the processor 501, or implemented by the processor 501. The processor 501 may be an integrated circuit chip with signal processing capabilities. In the implementation process, each step of the above-mentioned method can be completed by the hardware integrated logic circuit in the processor 501 or the instruction in the form of software. The above-mentioned processor 501 can be a general processor, a digital signal processor (DSP), an application specific integrated circuit (ASIC), a field programmable gate array (FPGA) or other programmable logic devices, discrete gates or transistor logic devices, discrete hardware components. Various methods, steps and logic block diagrams disclosed in the present application can be implemented or executed. The general processor can be a microprocessor, or the processor can also be any conventional processor. The steps of the method disclosed in the present application can be directly embodied as a hardware decoding processor to execute, or the hardware and software units in the decoding processor can be combined and executed. The software unit can be located in a mature storage medium in the field such as a random access memory, a flash memory, a read-only memory, a programmable read-only memory or an electrically erasable programmable memory, a register, etc. The storage medium is located in the memory 502, and the processor 501 reads the information in the memory 502 and completes the steps of the above-mentioned method in combination with its hardware.

It is understood that the embodiments described herein can be implemented by hardware, software, firmware, middleware, microcode or a combination thereof. For hardware implementation, the processing unit can be implemented in one or more application specific integrated circuits (ASIC), digital signal processors (DSP), digital signal processing devices (DSP Device, DSPD), programmable logic devices (PLD), field-programmable gate arrays (FPGA), general-purpose processors, controllers, microcontrollers, microprocessors, other electronic units for performing the above-mentioned functions of the present application or a combination thereof.

For software implementation, the above-mentioned technology herein can be implemented by a unit that performs the above-mentioned functions herein. The software code can be stored in the memory and executed by the processor. The memory can be implemented in the processor or outside the processor.

The electronic device provided in this embodiment may be an electronic device as shown in FIG. 5, which can execute all the steps of the voice authentication method described above, and then realize the technical effects of the voice authentication method described above. For details, please refer to the above related description. For the sake of brevity, it is not repeated here.

The present application further provides a storage medium (computer-readable storage medium). The storage medium here stores one or more programs. The storage medium may include a volatile memory, such as a random access memory. The memory may further include a non-volatile memory, such as a read-only memory, a flash memory, a hard disk or a solid-state hard disk. The memory may further include a combination of the above types of memory.

When one or more programs in the storage medium can be executed by one or more processors, the voice authentication method executed on the electronic device side is realized.

The above-mentioned processor is configured to execute the voice authentication program stored in the memory, so as to implement the following steps of the voice authentication method performed on the electronic device side: determining security level information of a scene where a target device is located; generating corresponding voice authentication condition based on the security level information; and obtaining a target voice, determining that the target voice meets the voice authentication condition, and passing the authentication. Professionals should also be further aware that the units and algorithm steps of each example described in the embodiments disclosed herein can be implemented in electronic hardware, computer software, or a combination of the two. In order to clearly illustrate the interchangeability of hardware and software, the composition and steps of each example have been generally described in the above description according to the function. Whether these functions are executed in hardware or software depends on the specific application and design constraints of the technical solution. Professionals and technicians can use different methods to implement the described functions for each specific application, but such implementation should not be considered to exceed the scope of the present application.

The voice authentication method provided by the present application can determine the security level information of the scene where the target device is located, and then generate the corresponding voice authentication condition based on the security level information; then, obtain the target voice, and determine that the target voice meets the voice authentication condition, and pass the authentication. Therefore, the corresponding voice authentication condition can be generated based on the security level of the scene where the target device is located, and then the voice authentication condition is adopted to determine whether the voice can pass the authentication, which can improve the efficiency and accuracy of the authentication in the corresponding scene.

The steps of the method or algorithm described in conjunction with the embodiments disclosed herein can be implemented by hardware, a software module executed by a processor, or a combination of the two. The software module can be placed in a random access memory (RAM), a memory, a read-only memory (ROM), an electrically programmable ROM, an electrically erasable programmable ROM, a register, a hard disk, a removable disk, a compact disc read-only memory (CD-ROM), or any other form of storage medium known in the technical field.

The above specific implementations methods further describe the purpose, technical solution and beneficial effects of the present application in detail. It should be understood that the above description is only a specific implementation method of the present application, and is not used to limit the scope of the present application. Any modification, equivalent replacement, improvement, etc. made within the spirit and principle of the present application should be included in the scope of the present application. In addition, for the sake of simple description, the aforementioned embodiments are all expressed as a series of action combinations, but those skilled in the art should know that the present application is not limited by the described action sequence, because according to the present application, some steps can be performed in other sequences or simultaneously. Secondly, those skilled in the art should also know that the embodiments described in the specification are some embodiments, and the actions and modules involved are not necessarily required by the present application.

## Claims

1. A voice authentication method, **characterized by** comprising:
determining security level information of a scene where a target device is located;
generating corresponding voice authentication condition based on the security level information; and
obtaining a target voice, determining that the target voice meets the voice authentication condition, and passing the authentication.

2. The method according to claim 1, wherein the determining the security level information of the scene where the target device is located comprises:
obtaining target Internet Protocol, IP, information of a network currently connected to the target device; and
determining the security level information of the scene where the target device is located based on the target IP information.

3. The method according to claim 2, wherein before the obtaining the target IP information of the network currently connected to the target device, the method further comprises:
collecting the IP information of the target device connecting to the network in a first historical time period according to a first frequency, and obtaining a multiple set of the IP information; and
determining a first number of times of collection corresponding to IP information in the multiple set of IP information, wherein the first number of times of collection corresponding to the IP information is: a number of times the target device is connected to the network indicated by corresponding IP information during collection;
the determining the security level information of the scene where the target device is located based on the target IP information comprises:
determining an IP information group whose network type, network range and network bits are identical to the target IP information from the multiple set of IP information;
determining sum of the first number of times of collection corresponding to each IP information in the IP information group, and obtaining a first result; and
determining the security level information of the scene where the target device is located based on the first result.

4. The method according to claim 3, wherein the determining the security level information of the scene where the target device is located based on the first result comprises:
determining a first target interval comprising the first result from a predetermined first interval set, wherein each interval in the first interval set corresponds to one security level information; and
determining the security level information corresponding to the first target interval as the security level information of the scene where the target device is located.

5. The method according to claim 1, wherein the determining the security level information of the scene where the target device is located comprises:
obtaining target location information of a current location of the target device; and
determining the security level information of the scene where the target device is located based on the target location information.

6. The method according to claim 5, wherein before the obtaining the target location information of the current location of the target device, the method further comprises:
collecting location information of a location of the target device in the second historical time period according to a second frequency, and obtaining a multiple set of the location information; and
determining a second number of times of collection corresponding to location information in the multiple set of the location information, wherein the second number of times of collection corresponding to the location information is: a number of times the target device is at a location indicated by corresponding location information during collection;
the determining the security level information of the scene where the target device is located based on the target location information comprises:
determining a location information group whose distance from a location indicated by the target location information is less than or equal to a preset distance from the multiple set of the location information;
determining sum of the second number of times of collection corresponding to each location information in the location information group, and obtaining a second result; and
determining the security level information of the scene where the target device is located based on the second result.

7. The method according to claim 6, wherein the determining the security level information of the scene where the target device is located based on the second result comprises:
determining a second target interval comprising the second result from a predetermined second interval set, wherein each interval in the second interval set corresponds to one security level information; and
determining the security level information corresponding to the second target interval as the security level information of the scene where the target device is located.

8. The method according to any one of claims 1 to 7, wherein the generating the corresponding voice authentication condition based on the security level information comprises:
generating a voice authentication condition whose authentication difficulty matches a security level indicated by the security level information based on the security level information.

9. The method according to claim 8, wherein the generating the voice authentication condition whose authentication difficulty matches the security level indicated by the security level information based on the security level information comprises:
in response to that the security level information indicates a first security level, determining that the voice authentication condition comprises a first voice authentication condition;
in response to that the security level information indicates a second security level, determining that the voice authentication condition comprises a second voice authentication condition; and
in response to that the security level information indicates a third security level, determining that the voice authentication condition comprises a third voice authentication condition;
wherein the first security level is higher than the second security level, and the second security level is higher than the third security level.

10. The method according to claim 9, wherein the first voice authentication condition comprises that the target voice comprise a preset keyword, the second voice authentication condition comprises that the target voice comprises a variable word that changes according to a preset rule, the third voice authentication condition comprises that the target voice passes voiceprint recognition.

11. The method according to any one of claims 1 to 7, wherein after the passing the authentication, the method further comprises:
performing an unlocking operation by the target device.

12. A voice authentication apparatus, **characterized by** comprising:
a first determination unit, configured for determining security level information of a scene where a target device is located;
a generation unit, configured for generating corresponding voice authentication condition based on the security level information; and
a second determination unit, configured for obtaining a target voice, determining that the target voice meets the voice authentication condition, and passing the authentication.

13. An electronic device, **characterized by** comprising:
a memory, configured for storing a computer program; and
a processor, configured for executing the computer program stored in the memory,
wherein the method according to any one of claims 1 to 11 is implemented when the computer program is executed.

14. A computer-readable storage medium, storing a computer program, wherein the method according to any one of claims 1 to 11 is implemented when the computer program is executed by a processor.
